# EUROPEAN PATENT SPECIFICATION

(11) **EP 2 244 418 B1**
(45) Date of publication and mention of the grant of the patent: **02.05.2018**
(21) Application number: 09802363.3
(22) Date of filing: 11.05.2009
(51) Int. Cl.: G06F 21/00, H04L 12/24

(54) **DATABASE SECURITY MONITORING METHOD, DEVICE AND SYSTEM**
DATENBANKSICHERHEITSÜBERWACHUNGSVERFAHREN, VORRICHTUNG UND SYSTEM
PROCÉDÉ ET DISPOSITIF DE SURVEILLANCE DE LA SÉCURITÉ D'UNE BASE DE DONNÉES, ET SON SYSTÈME

(30) Priority: 28.07.2008 CN 200810142578
(43) Date of publication of application: 27.10.2010
(73) Proprietor: Huawei Digital Technologies (Cheng Du) Co. Limited, Sichuan 611731 (CN)
(72) Inventor: JIANG, Wu, Guangdong 518129 (CN)
(74) Representative: Epping - Hermann - Fischer
(86) International application number: PCT/CN2009/071723
(87) International publication number: WO 2010/012170

(56) References cited:
- WO-A1-2007/037524
- CN-A- 101 043 335
- CN-A- 101 098 254
- GB-A- 2 448 071
- US-A1- 2005 108 568
- US-A1- 2005 120 054
- US-A1- 2006 041 547
- US-A1- 2006 059 154
- US-A1- 2007 136 312

## Description

### Field of the Invention

The present invention relates to information security technologies, and in particular, to a method, an apparatus, and a system for monitoring database security.

### Background of the Invention

With the popularity of computers and networks, the challenge of database security becomes more and more serious. More and more companies' core services are related to the Internet. Various network-based database application systems emerge one after another and provide information services for network users. The network system can be regarded as the external environment and basis of database applications. To play an important role, the database system requires the support from the network system, and users of the database system can access the database only through network. Therefore, database security first depends on the network system, and security of the network system is the first barrier to database security.

At present, database security methods mainly include the network probe technology, host agent technology, and log audit technology of the database system. The network probe technology of the database system probes packets in the network of the database system, obtains the packets, and then parses the packets according to the format of a database network protocol, thus performing security audit on the database access. The host agent technology of the database system records all operations in the database into a table by inserting a module in the database system and using the stored procedure and the trigger mechanism, thus auditing the database information as required. The log audit technology of the database system generates audit logs of database operations by using the auditing module of the database and then obtains the audit information to carry out analysis.

During the implementation of the present invention, the inventor finds at least the following weaknesses in the prior art: The method for monitoring database security in the prior art is mainly implemented through network data analysis, host agent, and log audit; data can be collected and analyzed in these modes, and all service system information is stored in the database. However, the method for associating service system access with database security and implementing end-to-end security audit from the terminal user or terminal software to the service system and then to the database system is unavailable in the prior art.

US 2006/041547 A1 discloses a method and apparatus for auditing database queries, wherein comments are added by a server prior to the server forwarding the queries to the database system. The comments are then used to derive audit information, which is correlated with other audit information in a different server, to produce a more complete audit record.

US 2005/0120054 A1 discloses a dynamic learning method and an adaptive normal behavior profile (NBP) architecture for providing fast protection of enterprise applications are disclosed. The adaptive NBP architecture includes a plurality of profile items. Each profile item includes a plurality of profile properties holding the descriptive values of the respective item. An application-level security system can identify and prevent attacks targeted at enterprise applications by matching application events against at least a single profile item in the adaptive NBP.

US 2007/0136312 A1 discloses a system and method which correlate between hypertext transfer protocol (HTTP) requests and structured query language (SQL) queries. The system operates in two modes: learn mode and protect mode. In the learn mode, the system identifies pairs of uniform resource locators (URLs) and SQL templates, in addition to, pairs of correlation parameters and SQL queries. In the protect mode, for each incoming SQL query, the system binds to each submitted SQL query a session identifier (sessionID) of a corresponding HTTP request and the user identity of the user that submitted the query.

### Summary of the Invention

Embodiments of the present invention provide a method, an apparatus, and a system for monitoring database security, which can reflect end-to-end security audit and security protection, thus associating user operations of an application system with user operations of a database.

A method for monitoring database security includes:
obtaining network data information of a service system and database information accessed by the service system in a database system respectively; and
analyzing and integrating the obtained network data information and database information;
recording the obtained network data information and database information in an audit format;
determining whether a violation occurs according to a preset rule and the network data information and database information recorded in the audit format;
generating a new filtering policy if violation occurs;
blocking subsequent user operations from the service system to the database according to the new filtering policy;
wherein the step of analyzing and integrating the obtained network data information and database information includes:
   establishing a one-to-one or one-to-many mapping between the obtained network data information;
   the method further including:
      a modeling phase, comprising:
      when performing a service operation, receiving network data information, read database information, and determining whether an associated template exists; if no such associated template exists, creating an associated template including a mapping between the network data information and the database information and then return to the step of receiving network data information; if the associated template exists, checking the associated template and determine whether the network data information and the database information is the same as the existing associated template; if the network data information and database information is the same as the existing associated template, return to the step of receiving network data information; otherwise, creating an new associated template including a mapping between the network data information and the database information, and then return to the step of receiving network data information; wherein the existing associated template includes a first record indicating service data information and at least one database operation, the first record includes service operation type, service operation, operation level, service object and template hash, the template hash indicates the hash results obtained by a hash function according to the service operation type, service operation, operation level, service object, the template hash method is used to compare a new template with an existing associated template to see whether they are the same, if the template hash is the same but the subsequent database operation commands are different, the new template is a child template of the existing associated template ;
      wherein, the step of analyzing and integrating the obtained network data information and database information further includes a work phase, including:
         receiving network data information, reading the corresponding template and database information, determining whether corresponding data exists, forming audit records if corresponding data exists; reading a child template, determine whether a child template exists; if a child template exists, return to the step of reading database information; if no child template exists, continue with the subsequent operation.

An analyzer for monitoring database security includes:
a front-end communicating module, adapted to communication with a front-end probe, configured to obtain network data information;
a back-end communicating module, adapted to communication with a back-end probe, configured to obtain database information; and
a data integrating module, configured to establish a one-to-one or one-to-many mapping between the network data information obtained by the front-end communicating module and database information obtained by the back-end communicating module, to form an audit link of user operations from the service system to the database, thus recognizing service data operated in front-end service operations and data operated in back-end database operations;
an information auditing module, connected to the data integrating module and a violation analyzing module, and configured to record the data recognized by the data integrating module in an audit format and then transmit the data to the violation analyzing module;
the violation analyzing module, configured to receive the data transmitted by the information auditing module, determine, according to a preset rule, whether a violation occurs, if violation occurs, generate a new filtering policy; and notify a response executing module;
the analyzer is further configured to perform a modeling phase, the modeling phase including: when performing a service operation, receive network data information, read database information operated in the database, and determine whether an associated template exists; if no such associated template exists, create an associated template including a mapping between the network data information and the database information and then return to the step of receiving network data information; if the associated template exists, check the associated template and determine whether the network data information and the database information is the same as the existing associated template; if the network data information and the database information is the same as the existing associated template, return to the step of receiving network data information; otherwise, create an new associated template including a mapping between the network data information and the database information and then return to the step of receiving network data information; wherein the existing associated template includes a first record indicating service data information and at least one database operation, the first record includes service operation type, service operation, operation level, service object and template hash, the template hash indicates the hash results obtained by a hash function according to the service operation type, service operation, operation level, service object, the template hash method is used to compare a new template with an existing associated template to see whether they are the same, if the template hash is the same but the subsequent database operation commands are different, the new template is a child template of the existing associated template ;
the data integrating module is further configured to receive network data information, read the corresponding template and the database information, determine whether corresponding data exists, form audit records if corresponding data exists;
read a child template, determine whether a child template exists; if a child template exists, return to the step of reading the database information; if no child template exists, continue with the subsequent operation.

The technical solution of the present invention provides at least the following benefits: In embodiments of the present invention, the obtained network data information and database information are analyzed and integrated; the complete information about user operations at the front end of the service system and the front end of the database
can be obtained; user operations of the application system are associated with user operations of the database; and user operations can be audited completely, and thus the problem that only the user operations of the database can be audited during database security audit is solved.

### Brief Description of the Drawings

To illustrate the technical solution according to the embodiments of the present invention or in the prior art more clearly, the accompanying drawings for describing the embodiments or the prior art are given briefly below. Apparently, the accompanying drawings in the following description are only some embodiments of the present invention, and persons of ordinary skill in the art can derive other drawings from the accompanying drawings without creative work.
FIG. 1 is a schematic drawing of a system for monitoring database security in an embodiment of the present invention;
FIG. 2 is a structure of a probe in a system for monitoring database security in an embodiment of the present invention;
FIG. 3 is a structure of an analyzer in a system for monitoring database security in an embodiment of the present invention;
FIG. 4 is a flowchart of a method for monitoring database security in an embodiment of the present invention;
FIG. 5 is a flowchart of a method for monitoring database security in the modeling phase in an embodiment of the present invention;
FIG. 6 is a flowchart of a method for monitoring database security in the working phase in an embodiment of the present invention; and
FIG. 7 is a structure of a template of a method for monitoring database security in an embodiment of the present invention.

### Detailed Description of the Embodiments

The following detailed description is directed to the technical solution of the present invention with reference to the accompanying drawings. However, the embodiments to be described are only part of, rather than all of, the embodiments of the present invention. All other embodiments, which can be derived by those skilled in the art from the embodiments given herein without any creative efforts, fall within the scope of the present invention.

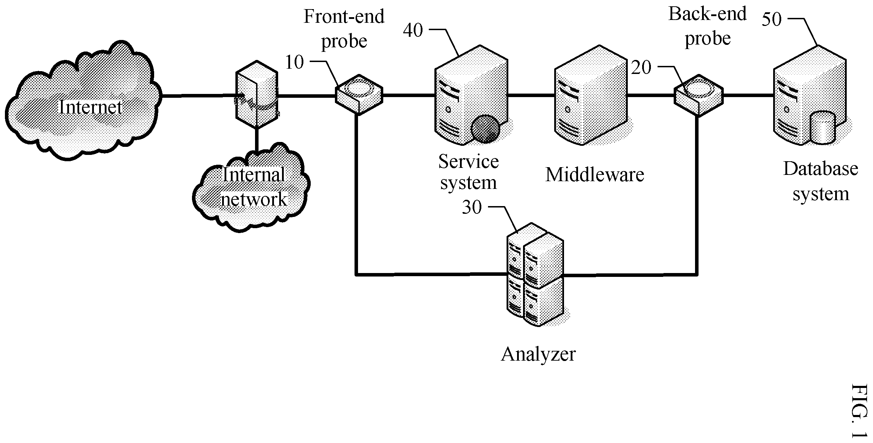

As shown in FIG. 1, the system for monitoring database security in an embodiment of the present invention includes a front-end probe 10, a back-end probe 20, and an analyzer 30. The front-end probe 10 is placed at the front end of the protected service system 40, and is configured to obtain network data information of the service system. The back-end probe 20 is placed in the network between the service system 40 and the database system 50, and is configured to obtain the database information accessed by the service system 40 in the database system 50. The analyzer 30 is connected to the front-end probe 10 and the back-end probe 20, and is configured to analyze and integrate the obtained network data information and database information. In this way, end-to-end audit of the user operations in the database is implemented. It is understandable that if multiple application servers or database servers exist, multiple front-end probes 10 and multiple back-end probes 20 may be set.

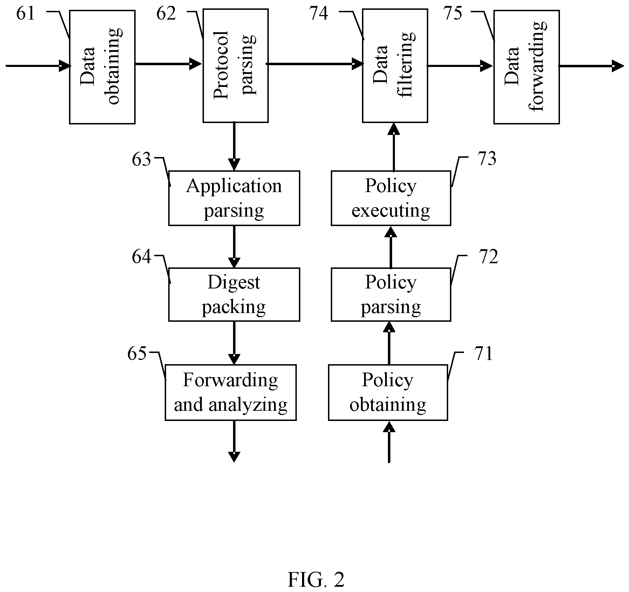

As shown in FIG. 2, in the system for monitoring database security in an embodiment of the present invention, the structure and working principle of the front-end probe 10 are basically the same as those of the back-end probe 20. The data obtaining module 61 obtains required network data information or database information from the service system 40 and the database system 50; the protocol parsing module 62 parses the service protocol and database access protocol; the parsed protocol information is transmitted to the analyzer 30 according to a specified format through the application parsing module 63, the digest packing module 64, and the forwarding and analyzing module 65 in turn. It is understandable that the process is cyclic. At the same time, the front-end probe 10 and the back-end probe 20 accept the filtering policy delivered by the analyzer 30 through the policy obtaining module 71, and the policy parsing module 72 parses the policy. The parsed policy is then transmitted through the policy executing module 73, the data filtering module 74, and the data forwarding module 75 in turn to the service system 40 and the database system 50 for execution.

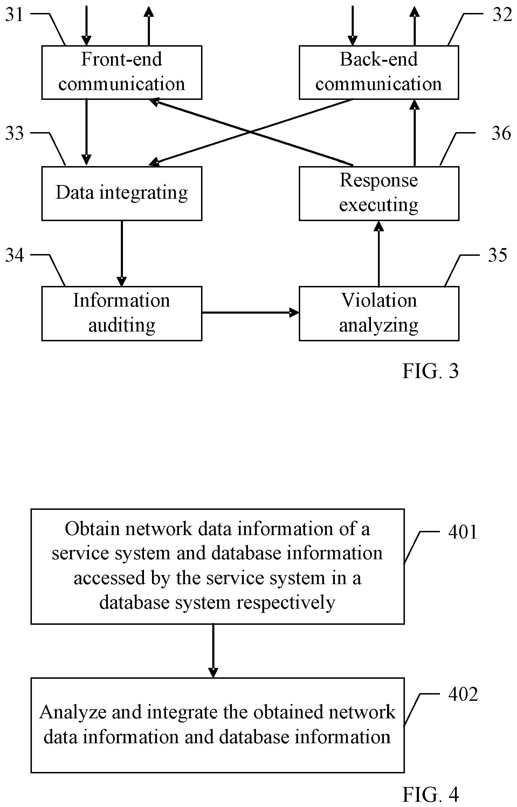

As shown in FIG. 3, the analyzer 30 in the system for monitoring database security in an embodiment of the present invention includes:
a front-end communicating module 31 and a back-end communicating module 32, in communication with a front-end probe 10 and a back-end probe 20 respectively, configured to obtain data information or deliver an operation command;
a data integrating module 33, connected to the front-end communicating module 31 and the back-end communicating module 32, and configured to associate the network data information obtained by the front-end communicating module 31 with the database information obtained by the back-end communicating module 32, thus recognizing the data operated in front-end service operations and back-end database operations;
an information auditing module 34, connected to the data integrating module 33 and a violation analyzing module 35, and configured to record the data recognized by the data integrating module 33 in the audit format and then transmit the data to the violation analyzing module 35;
the violation analyzing module 35, configured to: receive the data transmitted by the information auditing module 34 and determine, according to a preset rule, whether violation occurs, and, if violation occurs, generate a new filtering policy and notify a response executing module 36; and
the response executing module 36, configured to receive the generated filtering policy and transmit the filtering policy to the front-end probe 10 and the back-end probe 20 respectively through the front-end communicating module 31 and the back-end communicating module 32, thus blocking subsequent operations. Generally, the preceding filtering policy command is similar to a traditional access control list (ACL), which mainly controls the access of application protocols and whether to perform operations such as blocking the corresponding communication.

As shown in FIG. 4, a method for monitoring database security in an embodiment of the present invention includes:
401: Obtain network data information of a service system and database information accessed by the service system in a database system respectively.
402: Analyze and integrate the obtained network data information and database information.

It is understandable that the data integrating operation in the method for monitoring database security can establish a one-to-one or one-to-many mapping between the network data information obtained by the front-end probe 10 and the database information obtained by the back-end probe 20. With the mapping, the complete information about user operations at the front end of the service system and the front end of the database can be obtained; and user operations can be audited completely, and thus the problem that only the user operations of the database can be audited during database security audit is solved. After the analysis and integration are completed, the integrated and recognized data is audited and recorded, and whether violation occurs is determined according to a preset rule; if violation occurs, a new filtering policy is generated.

It is understandable that the method for monitoring database security in an embodiment of the present invention can parse database access protocols such as Transparent Network Substrate (TNS), Distributed Relational Database Architecture (DRDA), and Tabular Data Stream (TDS) to parse network data of mainstream databases such as Oracle\DB2\MS SQL, obtain the database operations and database user operations through parsing, and obtain the IP address, account, and request operation of the service user by parsing service system data. Such a service request often forms one or more database operations. With the mapping between the database operations and the service operations, an audit link of user operations is formed from the service system to the database to determine whether an operation violates the requirement and to reject the request out of the link. To further ensure the normal execution of audit, the method for monitoring database security may be arranged to learn for a period of time before normal usage so as to establish a mapping between the service access and the database operation. Secondly, because the method for monitoring database security connects the front-end probe 10 and the back-end probe 20 in series with the network, the application access request that does not comply with the access protocol format is discarded and cannot arrive at the actual system, and thus resource consumption is avoided. Thirdly, the method for monitoring database security creates an access matrix between the database and the service user through the analyzer 30; if an access request does not comply with the access matrix, the access request is rejected by the back-end probe 20.

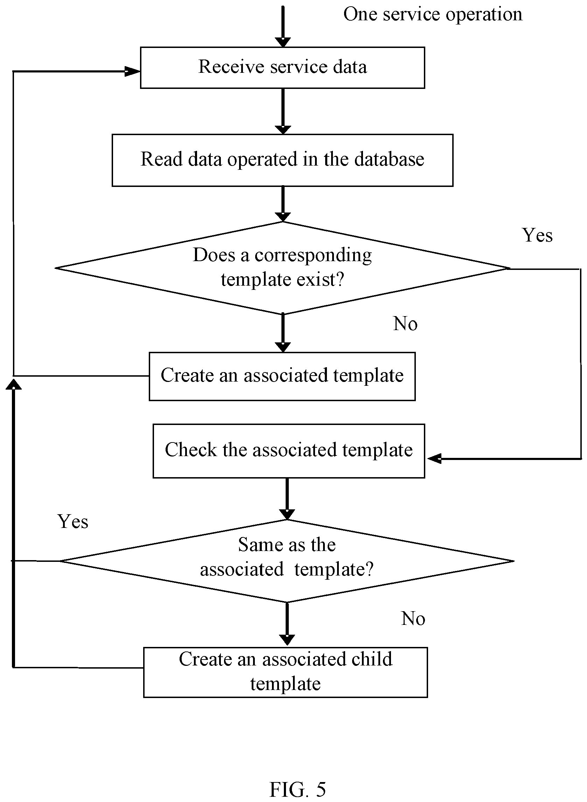

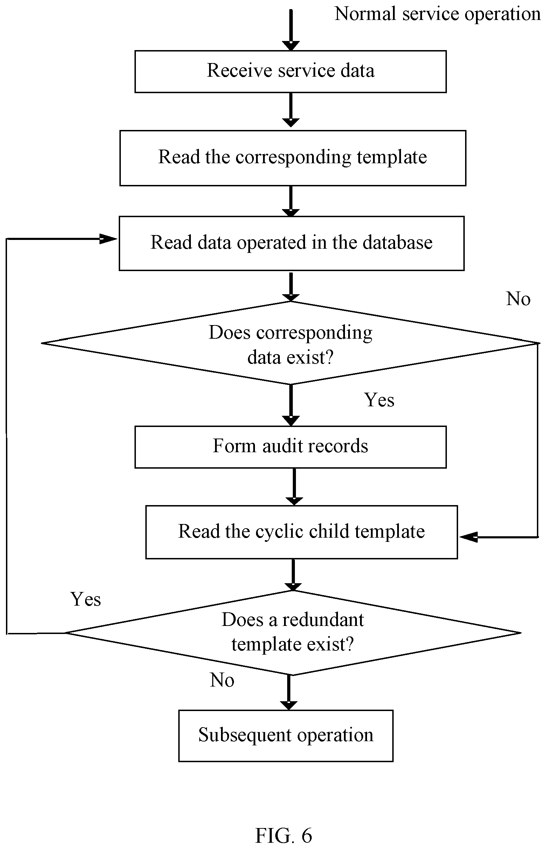

As shown in FIG. 5 and FIG. 6, to further ensure the normal execution of audit, the system for monitoring database security in an embodiment of the present invention may be arranged to learn for a period of time before normal usage. In other words, data integration is divided into modeling phase and working phase. In the modeling state, an associated template for access is created by establishing the mapping between service application access and database access. In this way, in the working state, as long as the access matches the template, data can be extracted, and access analysis is not required any longer, which further improves efficiency.

The following describes the implementation processes of the two phases.

Modeling phase: When performing one service operation, receive service data, read the data operated in the database, and determine whether an associated template exists; if no such template exists, create an associated template and then return to the step of receiving service data; if such a template exists, check the associated template and determine whether the template is the same as the associated template; if the template is the same as the associated template, return to the step of receiving service data; otherwise, create an associated template and then return to the step of receiving service data.

Working phase: When a normal service operation is performed after completion of the modeling phase, receive service data, read the corresponding template and the data operated in the database, determine, according to whether corresponding data exists, whether to form audit records; then read the cyclic child template, determine whether a redundant template exists; if a redundant template exists, return to the step of reading the data operated in the database; if no redundant template exists, continue the subsequent operation.

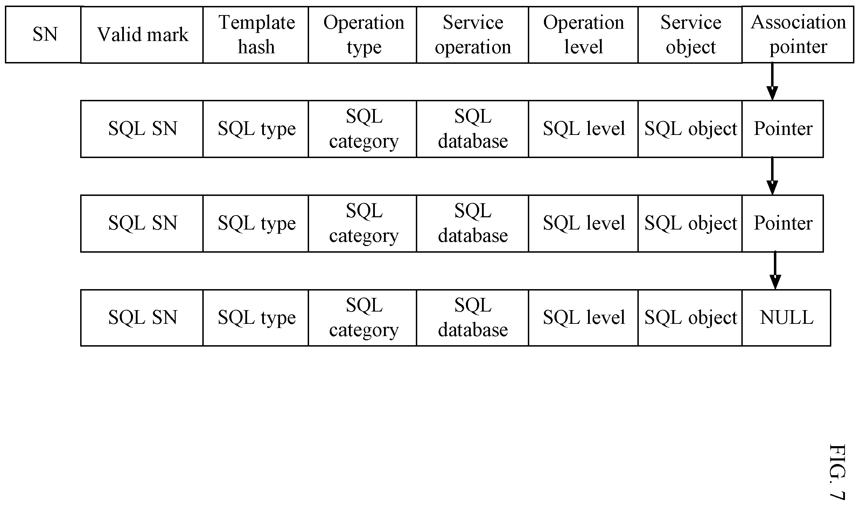

As shown in FIG. 7, taking the format of a template as an example, the first record indicates service data information. An association pointer can associate the service operation of the record with the corresponding database operation. The last three records are the corresponding database operation pointers. A template hash indicates the hash results obtained by the hash function according to the service operation type, service operation, operation level, and service object. Usually the template hash method is used to compare a template with an old template to see whether they are the same. If the template hash is the same but the subsequent database operation commands are different, the new template is a child template of the old template, and the corresponding template sequence number (SN) is different. In addition, the database operation statements are in sequence. The audit record is to record actual data according to the template. Therefore, the audit record has more data than the template. In the service data part of the excess data, fields such as the service user name, IP address of the service user terminal, and access time of the service user may be added. In each database operation, some fields, such as the user name of the database operation, database operation time, database operation details, and whether an operation succeeds, may be added, and the structure is similar to the preceding structure.

It is understandable that the common Web applications in actual applications are combined with the applications of the MS SQL Server database to describe the method, apparatus, and system for monitoring database security in embodiments of the present invention. In embodiments of the present invention, the front-end probe 10 obtains network HTTP data for parsing protocols; the back-end probe 20 parses the TDS protocol of the SQL database. The two probes send data to the data integrating module 33 of the analyzer 30 as soon as possible; the data integrating module 33 performs matching according to the template that is formed through learning completed in advance, first fills the service operation type, service operation, operation level, and service object according to the HTTP statement, and then forms a hash according to the filled contents. Afterwards, the data integrating module 33 reads the bucket array of the template table, reads the same hash according to the valid marks, and if a same hash is found, queries the TDS data for the recent data complying with the event according to the SQL event SN recorded in the template, and completes the filling of the entire audit event structure.

Persons of ordinary skill in the art should understand that all or part of the steps of the method according to the embodiments of the present invention may be implemented by a program instructing relevant hardware. The program may be stored in a computer readable storage medium. When the program runs, the steps of the method according to the embodiments of the present invention are performed. The storage medium may be a magnetic disk, a compact disk read-only memory (CD-ROM), a read-only memory (ROM) or a random access memory (RAM).

Detailed above are only some exemplary embodiments of the present invention. It is apparent that those skilled in the art can make various modifications and variations to the present invention without departing from the scope of the present invention.

## Claims

1. A method for monitoring database security, comprising:
obtaining network data information of a service system and database information accessed by the service system from a database system respectively;
analyzing and integrating the obtained network data information and database information;
recording the obtained network data information and database information in an audit format;
determining whether a violation occurs according to a preset rule and the network data information and database information recorded in the audit format;
generating a new filtering policy if violation occurs;
blocking subsequent user operations from the service system to the database according to the new filtering policy;
wherein the step of analyzing and integrating the obtained network data information and database information comprises:
establishing a one-to-one or one-to-many mapping between the obtained network data information and the obtained database information;
the method further comprising:
a modeling phase, comprising:
when performing a service operation, receiving network data information, read database information, and determining whether an associated template exists; if no such associated template exists, creating an associated template comprising a mapping between the network data information and the database information and then return to the step of receiving network data information; if the associated template exists, checking the associated template and determine whether the network data information and the database information is the same as network data information and database information contained in the existing associated template; if the network data information and database information is the same as network data information and database information contained in the existing associated template, return to the step of receiving network data information; otherwise, creating an new associated template comprising a mapping between the network data information and the database information, and then return to the step of receiving network data information; wherein the existing associated template comprises a first record indicating service data information and at least one database operation, the first record comprises service operation type, service operation, operation level, service object and template hash, the template hash indicates the hash results obtained by a hash function according to the service operation type, service operation, operation level, service object, the template hash method is used to compare a new template with an existing associated template to see whether they are the same, if the template hash is the same but the subsequent database operation commands are different, the new template is a child template of the existing associated template;
wherein, the step of analyzing and integrating the obtained network data information and database information further comprises a working phase, comprising:
receiving network data information, reading the corresponding template and database information, determining whether corresponding data exists, forming audit records if corresponding data exists; reading a child template, determine whether a child template exists; if a child template exists, return to the step of reading database information; if no child template exists, continue with the subsequent operation.

2. The method of claim 1, wherein the obtained network data information of the service system comprises at least one of the following items: an IP address of a service user, an account of the service user, and a request operation of the service user.

3. The method of claim 1, wherein the obtained database information accessed by the service system in the database system comprises at least one of: a database operation and a database user.

4. An analyzer (30) for monitoring database security, comprising:
a front-end communicating module, adapted to communicate with a front-end probe (10), configured to obtain network data information;
a back-end communicating module, adapted to communicate with a back-end probe (20), configured to obtain database information; and
a data integrating module, configured to establish a one-to-one or one-to-many mapping between the network data information obtained by the front-end communicating module and database information obtained by the back-end communicating module, to form an audit link of user operations from the service system (40) to the database, thus recognizing service data operated in front-end service operations and data operated in back-end database operations;
an information auditing module, connected to the data integrating module and a violation analyzing module, and configured to record the data recognized by the data integrating module in an audit format and then transmit the data to the violation analyzing module;
the violation analyzing module, configured to receive the data transmitted by the information auditing module, determine, according to a preset rule, whether a violation occurs, if violation occurs, generate a new filtering policy; and notify a response executing module (36);
the analyzer is further configured to perform a modeling phase, the modeling phase comprising: when performing a service operation, receive network data information, read database information operated in the database, and determine whether an associated template exists; if no such associated template exists, create an associated template comprising a mapping between the network data information and the database information and then return to the step of receiving network data information; if the associated template exists, check the associated template and determine whether the network data information and the database information is the same as network data information and database information contained in the existing associated template; if the network data information and database information is the same as network data information and database information contained in the existing associated template , return to the step of receiving network data information; otherwise, create an new associated template comprising a mapping between the network data information and the database information and then return to the step of receiving network data information; wherein the existing associated template comprises a first record indicating service data information and at least one database operation, the first record comprises service operation type, service operation, operation level, service object and template hash, the template hash indicates the hash results obtained by a hash function according to the service operation type, service operation, operation level, service object, the template hash method is used to compare a new template with an existing associated template to see whether they are the same, if the template hash is the same but the subsequent database operation commands are different, the new template is a child template of the existing associated template;
the data integrating module is further configured to receive network data information, read the corresponding template and the database information, determine whether corresponding data exists, form audit records if corresponding data exists; read a child template, determine whether a child template exists; if a child template exists, return to the step of reading the database information; if no child template exists, continue with the subsequent operation.

5. The analyzer (30) of claim 4, further comprising:
the response executing module (36), configured to receive the generated filtering policy, and transmit the policy to the front-end probe (10) and the back-end probe (20) through the front-end communicating module and the back-end communicating module respectively.

6. A system for monitoring database security, **characterized in that** system for monitoring database security comprises an analyzer (30) according to any one of claims 4 to 5 and a front-end probe (10), configured to obtain network data information of a service system (40) and a back-end probe (20), configured to obtain database information accessed by the service system (40) in a database system (50).

7. The system for monitoring database security according to claim 6, wherein: the front-end probe (10) is placed at a front end of the service system (40), and the back-end probe (20) is placed in a network between the service system (40) and the database system (50).

8. The system for monitoring database security according to claim 6, wherein: the front-end probe (10) is configured to obtain required network data information from the service system (40), and the back-end probe (20) is configured to obtain required database information from the database system (50) through a data obtaining module respectively, parse a service protocol and a database access protocol through a protocol parsing module respectively, and then transmit the parsed protocol information to the analyzer (30) through an application parsing module, a digest packing module, and a forwarding and analyzing module in turn according to a specified format.

9. The system for monitoring database security according to claim 6, wherein: the front-end probe (10) and the back-end probe (20) are configured to accept a filtering policy delivered by the analyzer (30) through a policy obtaining module, and after a policy parsing module parses the policy, transmit the policy to the service system (40) and database system (50) through a policy executing module, a data filtering module, and a data forwarding module in turn.

## Patentansprüche

1. Verfahren zur Überwachung der Datenbanksicherheit, umfassend:
Gewinnen von Netzdateninformationen eines Dienstsystems bzw. von Datenbankinformationen, auf die das Dienstsystem zugegriffen hat, von einem Datenbanksystem;
Analysieren und Integrieren der gewonnenen Netzdateninformationen und Datenbankinformationen;
Aufzeichnen der gewonnenen Netzdateninformationen und Datenbankinformationen in einem Prüfformat;
Bestimmen, ob ein Sicherheitsverstoß vorliegt, anhand einer voreingestellten Regel und der Netzdateninformationen und Datenbankinformationen, die im Prüfformat aufgezeichnet wurden;
Erzeugen einer neuen Filterungsrichtlinie, falls ein Sicherheitsverstoß vorliegt;
Blockieren nachfolgender Benutzeroperationen vom Dienstsystem an der Datenbank gemäß der neuen Filterungsrichtlinie;
wobei der Schritt des Analysierens und Integrierens der gewonnenen Netzdateninformationen und Datenbankinformationen umfasst:
Herstellen einer Eins-zu-Eins- oder Eins-zu-Viele-Zuordnung zwischen den gewonnenen Netzdateninformationen und den gewonnenen Datenbankinformationen;
wobei das Verfahren ferner umfasst:
eine Modellierungsphase, umfassend:
wenn eine Dienstoperation ausgeführt wird, Empfangen von Netzdateninformationen, Auslesen von Datenbankinformationen und Bestimmen, ob eine zugehörige Schablone vorhanden ist; falls keine solche zugehörige Schablone vorhanden ist, Erzeugen einer zugehörigen Schablone, welche eine Zuordnung zwischen den Netzdateninformationen und den Datenbankinformationen umfasst, und anschließend Zurückkehren zum Schritt des Empfangens von Netzdateninformationen; falls die zugehörige Schablone vorhanden ist, Prüfen der zugehörigen Schablone und Bestimmen, ob die Netzdateninformationen und die Datenbankinformationen identisch mit den Netzdateninformationen und Datenbankinformationen sind, welche in der vorhandenen zugehörigen Schablone enthalten sind; falls die Netzdateninformationen und Datenbankinformationen identisch mit den Netzdateninformationen und Datenbankinformationen sind, welche in der vorhandenen zugehörigen Schablone enthalten sind, Zurückkehren zum Schritt des Empfangens von Netzdateninformationen; andernfalls Erzeugen einer zugehörigen Schablone, welche eine Zuordnung zwischen den Netzdateninformationen und den Datenbankinformationen umfasst, und anschließend Zurückkehren zum Schritt des Empfangens von Netzdateninformationen; wobei die vorhandene zugehörige Schablone umfasst: einen ersten Datensatz, der Dienstdateninformationen und wenigstens eine Datenbankoperation anzeigt, wobei der erste Datensatz den Typ von Dienstoperation, die Dienstoperation, die Operationsebene, das Dienstobjekt und ein "Template-Hash" umfasst, wobei das "Template-Hash" die von einer "Hash"-Funktion erzielten "Hash"-Ergebnisse gemäß dem Typ der Dienstoperation, der Dienstoperation, der Operationsebene, dem Dienstobjekt anzeigt; das "Template-Hash"-Verfahren wird angewandt, um eine neue Schablone ("Template") mit einer vorhandenen zugehörigen Schablone zu vergleichen, um festzustellen, ob sie identisch sind; falls die "Template-Hash" identisch ist, die nachfolgenden Datenbankoperationsbefehle jedoch davon verschieden sind, ist die neue Schablone eine Ablegerschablone der vorhandenen zugehörigen Schablone;
wobei der Schritt des Analysierens und Integrierens der gewonnenen Netzdateninformationen und Datenbankinformationen ferner eine Arbeitsphase umfasst, umfassend:
Empfangen von Netzdateninformationen, Auslesen der entsprechenden Schablonen- und Datenbankinformationen, Bestimmen, ob entsprechende Daten vorhanden sind, Bilden von Prüfdatensätzen, falls entsprechende Daten vorhanden sind; Auslesen einer Ablegerschablone, Bestimmen, ob eine Ablegerschablone vorhanden ist; falls eine Ablegerschablone vorhanden ist, Zurückkehren zum Schritt des Auslesens von Datenbankinformationen; falls keine Ablegerschablone vorhanden ist, Fortfahren mit der nachfolgenden Operation.

2. Verfahren nach Anspruch 1, wobei die gewonnenen Netzdateninformationen des Dienstsystems wenigstens eine der folgenden Positionen umfassen: eine IP-Adresse eines Dienstnutzers, ein Konto des Dienstnutzers und eine Anforderungsoperation des Dienstnutzers.

3. Verfahren nach Anspruch 1, wobei die gewonnenen Datenbankinformationen, auf die das Dienstsystem zugegriffen hat, im Datenbanksystem wenigstens eine Datenbankoperation und/oder einen Datenbanknutzer umfassen.

4. Analysator (30) zur Überwachung der Datenbanksicherheit, umfassend:
ein "Frontend"-Kommunikationsmodul, das dafür ausgelegt ist, mit einem "Frontend"-Aufnehmerelement (10) zu kommunizieren, welches dafür ausgelegt ist, Netzdateninformationen zu gewinnen;
ein "Backend"-Kommunikationsmodul, das dafür ausgelegt ist, mit einem "Backend"-Aufnehmerelement (20) zu kommunizieren, welches dafür ausgelegt ist, Datenbankinformationen zu gewinnen; und
ein Datenintegrationsmodul, das dafür ausgelegt ist, eine Eins-zu-Eins- oder Eins-zu-Viele-Zuordnung zwischen den vom "Frontend"-Kommunikationsmodul gewonnenen Netzdateninformationen und den vom "Backend"-Kommunikationsmodul gewonnenen Datenbankinformationen herzustellen, um eine Prüfverknüpfung der Benutzeroperationen vom Dienstsystem (40) mit der Datenbank herzustellen und dadurch Dienstdaten, die in "Frontend"-Dienstoperationen verwendet werden, und Daten, die in "Backend"-Datenbankoperationen verwendet werden, zu erkennen;
ein Informationsprüfmodul, das mit dem Datenintegrationsmodul und einem Sicherheitsverstoßanalysemodul verbunden ist und das dafür ausgelegt ist, die vom Datenintegrationsmodul erkannten Daten in einem Prüfformat aufzuzeichnen und die Daten anschließend an das Sicherheitsverstoßanalysemodul zu senden;
das Sicherheitsverstoßanalysemodul, das dafür ausgelegt ist, die vom Informationsprüfmodul übertragenen Daten zu empfangen, gemäß einer voreingestellten Regel zu bestimmen, ob ein Sicherheitsverstoß vorliegt, und falls ein Sicherheitsverstoß vorliegt, eine neue Filterungsrichtlinie zu erzeugen; und ein Antwortausführungsmodul (36) zu benachrichtigen;
wobei der Analysator ferner dafür ausgelegt ist, eine Modellierungsphase auszuführen, wobei die Modellierungsphase umfasst: wenn eine Dienstoperation ausgeführt wird, Empfangen von Netzdateninformationen, Auslesen von verwendeten Datenbankinformationen in der Datenbank und Bestimmen, ob eine zugehörige Schablone vorhanden ist; falls keine solche zugehörige Schablone vorhanden ist, Erzeugen einer zugehörigen Schablone, welche eine Zuordnung zwischen den Netzdateninformationen und den Datenbankinformationen umfasst, und anschließend Zurückkehren zum Schritt des Empfangens von Netzdateninformationen; falls die zugehörige Schablone vorhanden ist, Prüfen der zugehörigen Schablone und Bestimmen, ob die Netzdateninformationen und die Datenbankinformationen identisch mit den Netzdateninformationen und Datenbankinformationen sind, welche in der vorhandenen zugehörigen Schablone enthalten sind; falls die Netzdateninformationen und Datenbankinformationen identisch mit den Netzdateninformationen und Datenbankinformationen sind, welche in der vorhandenen zugehörigen Schablone enthalten sind, Zurückkehren zum Schritt des Empfangens von Netzdateninformationen; andernfalls Erzeugen einer neuen zugehörigen Schablone, welche eine Zuordnung zwischen den Netzdateninformationen und den Datenbankinformationen umfasst, und anschließend Zurückkehren zum Schritt des Empfangens von Netzdateninformationen; wobei die vorhandene zugehörige Schablone umfasst: einen ersten Datensatz, der Dienstdateninformationen und wenigstens eine Datenbankoperation anzeigt, wobei der erste Datensatz den Typ von Dienstoperation, die Dienstoperation, die Operationsebene, das Dienstobjekt und ein "Template-Hash" umfasst, wobei das "Template-Hash" die von einer "Hash"-Funktion erzielten "Hash"-Ergebnisse gemäß dem Typ der Dienstoperation, der Dienstoperation, der Operationsebene, dem Dienstobjekt anzeigt; das "Template-Hash"-Verfahren wird angewandt, um eine neue Schablone ("Template") mit einer vorhandenen zugehörigen Schablone zu vergleichen, um festzustellen, ob sie identisch sind; falls die "Template-Hash" identisch ist, die nachfolgenden Datenbankoperationsbefehle jedoch davon verschieden sind, ist die neue Schablone eine Ablegerschablone der vorhandenen zugehörigen Schablone;
das Datenintegrationsmodul ferner ausgelegt ist zum Empfangen von Netzdateninformationen, Auslesen der entsprechenden Schablonen- und der Datenbankinformationen, Bestimmen, ob entsprechende Daten vorhanden sind, Bilden von Prüfdatensätzen, falls entsprechende Daten vorhanden sind; Auslesen einer Ablegerschablone, Bestimmen, ob eine Ablegerschablone vorhanden ist; falls eine Ablegerschablone vorhanden ist, Zurückkehren zum Schritt des Auslesens von Datenbankinformationen; falls keine Ablegerschablone vorhanden ist, Fortfahren mit der nachfolgenden Operation.

5. Analysator (30) nach Anspruch 4, ferner umfassend:
das Antwortausführungsmodul (36), das dafür ausgelegt ist, die erzeugte Filterungsrichtlinie zu empfangen und die Richtlinie über das "Frontend"-Kommunikationsmodul bzw. das "Backend"-Kommunikationsmodul an das "Frontend"-Aufnehmerelement (10) und das "Backend"-Aufnehmerelement (20) zu senden.

6. System zur Überwachung der Datenbanksicherheit, **dadurch gekennzeichnet, dass** das System zur Überwachung der Datenbanksicherheit umfasst: einen Analysator (30) gemäß einem der Ansprüche 4 bis 5 und ein "Frontend"-Aufnehmerelement (10), welches dafür ausgelegt ist, Netzdateninformationen eines Dienstsystems (40) zu gewinnen, sowie ein "Backend"-Aufnehmerelement (20), das dafür ausgelegt ist, Datenbankinformationen zu gewinnen, auf die das Dienstsystem (40) in einem Datenbanksystem (50) zugegriffen hat.

7. System zur Überwachung der Datenbanksicherheit gemäß Anspruch 6, wobei: das "Frontend"-Aufnehmerelement (10) an einem "Frontend" des Dienstsystems (40) angeordnet ist und das "Backend"-Aufnehmerelement (20) in einem Netzwerk zwischen dem Dienstsystem (40) und dem Datenbanksystem (50) angeordnet ist.

8. System zur Überwachung der Datenbanksicherheit gemäß Anspruch 6, wobei: das "Frontend"-Aufnehmerelement (10) dafür ausgelegt ist, benötigte Netzdateninformationen vom Dienstsystem (40) zu gewinnen, und das "Backend"-Aufnehmerelement (20) dafür ausgelegt ist, benötigte Datenbankinformationen aus dem Datenbanksystem (50) zu gewinnen, über ein jeweiliges Datengewinnungsmodul, ein Dienstprotokoll und ein Datenbankzugriffsprotokoll jeweils mithilfe eines Protokollanalysemoduls zu analysieren und anschließend die analysierten Protokollinformationen nacheinander über ein Anwendungsanalysemodul, ein Übersichtpaketiermodul und ein Weiterleitungs- und Analysiermodul entsprechend einem spezifizierten Format an den Analysator (30) zu senden.

9. System zur Überwachung der Datenbanksicherheit gemäß Anspruch 6, wobei: das "Frontend"-Aufnehmerelement (10) und das "Backend"-Aufnehmerelement (20) dafür ausgelegt sind, eine vom Analysator (30) über ein Richtliniengewinnungsmodul gelieferte Filterungsrichtlinie zu akzeptieren und, nachdem das Richtlinienanalysiermodul die Richtlinie analysiert hat, die Richtlinie nacheinander über ein Richtlinienausführungsmodul, ein Datenfilterungsmodul und ein Datenweiterleitungsmodul an das Dienstsystem (40) und das Datenbanksystem (50) zu senden.

## Revendications

1. Procédé de surveillance de la sécurité d'une base de données, comprenant les étapes suivantes :
obtention respective d'informations de données réseau d'un système de service et d'informations de base de données accédées par le système de service à partir d'un système de base de données ;
analyse et intégration des informations de données réseau et des informations de base de données obtenues ;
enregistrement des informations de données réseau et des informations de base de données obtenues dans un format d'audit ;
détermination si une infraction s'est produite selon une règle prédéfinie et les informations de données réseau et les informations de base de données enregistrées dans le format d'audit ;
génération d'une nouvelle politique de filtrage si une infraction se produit ;
blocage d'opérations d'utilisateur suivantes depuis le système de service vers la base de données selon la nouvelle politique de filtrage ;
l'étape d'analyse et d'intégration des informations de données réseau et des informations de base de données obtenues comprenant l'étape suivante :
établissement d'une relation de correspondance univoque ou multivoque entre les informations de données réseau obtenues et les informations de base de données obtenues ;
le procédé comprenant en outre :
une phase de modélisation, comprenant les étapes suivantes :
lors de l'exécution d'une opération de service, réception d'informations de données réseau, lecture d'informations de base de données et détermination si un modèle associé existe ; si un tel modèle associé n'existe pas, création d'un modèle associé comprenant une relation de correspondance entre les informations de données réseau et les informations de base de données puis retour à l'étape de réception d'informations de données réseau ; si le modèle associé existe, vérification du modèle associé et détermination si les informations de données réseau et les informations de base de données sont les mêmes que des informations de données réseau et des informations de base de données contenues dans le modèle associé existant ; si les informations de données réseau et les informations de base de données sont les mêmes que des informations de données réseau et des informations de base de données contenues dans le modèle associé existant, retour à l'étape de réception d'informations de données réseau ; dans le cas contraire, création d'un nouveau modèle associé comprenant une relation de correspondance entre les informations de données réseau et les informations de base de données, puis retour à l'étape de réception d'informations de données réseau ; le modèle associé existant comprenant un premier enregistrement indiquant des informations de données de service et au moins une opération de base de données, le premier enregistrement comprenant un type d'opération de service, une opération de service, un niveau d'opération, un objet de service et un hachage de modèle, le hachage de modèle indiquant les résultats de hachage obtenus par une fonction de hachage selon le type d'opération de service, l'opération de service, le niveau d'opération, l'objet de service, le procédé de hachage de modèle servant à comparer un nouveau modèle à un modèle associé existant dans le but d'établir si ce sont les mêmes, si le hachage de modèle est le même mais les commandes d'opération de base de données suivantes sont différentes, le nouveau modèle étant un modèle-enfant du modèle associé existant ;
l'étape d'analyse et d'intégration des informations de données réseau et des informations de base de données obtenues comprenant en outre une phase de travail, comprenant les étapes suivantes :
réception d'informations de données réseau, lecture du modèle correspondant et des informations de base de données, détermination si des données correspondantes existent, formation d'enregistrements d'audit si des données correspondantes existent ; lecture d'un modèle-enfant, détermination si un modèle-enfant existe ; si un modèle-enfant existe, retour à l'étape de lecture d'informations de base de données ; si un modèle-enfant n'existe pas, passage à l'opération suivante.

2. Procédé selon la revendication 1, dans lequel les informations de données réseau obtenues du système de service comprennent au moins un des éléments suivants : une adresse IP d'un utilisateur de service, un compte de l'utilisateur de service, et une opération de requête de l'utilisateur de service.

3. Procédé selon la revendication 1, dans lequel les informations de base de données obtenues accédées par le système de service dans le système de base de données comprennent : une opération de base de données et/ou un utilisateur de base de données.

4. Analyseur (30) de surveillance de la sécurité d'une base de données, comprenant :
un module de communication frontal, adapté à communiquer avec une sonde frontale (10), configurée pour obtenir des informations de données réseau ;
un module de communication dorsal, adapté à communiquer avec une sonde dorsale (20), configurée pour obtenir des informations de base de données ; et
un module d'intégration de données, configuré pour établir une relation de correspondance univoque ou multivoque entre les informations de données réseau obtenues par le module de communication frontal et les informations de base de données obtenues par le module de communication dorsal, dans le but de former une liaison d'audit d'opérations d'utilisateur depuis le système de service (40) jusqu'à la base de données, pour ainsi reconnaître des données de service fournies dans des opérations de service frontales et des données fournies dans des opérations de base de données dorsales ;
un module d'audit d'informations, relié au module d'intégration de données et à un module d'analyse d'infraction, et configuré pour enregistrer les données reconnues par le module d'intégration de données dans un format d'audit puis transmettre les données au module d'analyse d'infraction ;
le module d'analyse d'infraction, configuré pour recevoir les données transmises par le module d'audit d'informations, déterminer, selon une règle prédéfinie, si une infraction se produit, si une infraction se produit, générer une nouvelle politique de filtrage ; et notifier un module d'exécution de réponse (36) ;
l'analyseur étant configuré en outre pour exécuter une phase de modélisation, la phase de modélisation comprenant les étapes suivantes :
lors de l'exécution d'une opération de service, réception d'informations de données réseau, lecture d'informations de base de données fournies dans la base de données et détermination si un modèle associé existe ; si un tel modèle associé n'existe pas, création d'un modèle associé comprenant une relation de correspondance entre les informations de données réseau et les informations de base de données puis retour à l'étape de réception d'informations de données réseau ; si le modèle associé existe, vérification du modèle associé et détermination si les informations de données réseau et les informations de base de données sont les mêmes que des informations de données réseau et des informations de base de données contenues dans le modèle associé existant ; si les informations de données réseau et les informations de base de données sont les mêmes que des informations de données réseau et des informations de base de données contenues dans le modèle associé existant, retour à l'étape de réception d'informations de données réseau ; dans le cas contraire, création d'un nouveau modèle associé comprenant une relation de correspondance entre les informations de données réseau et les informations de base de données, puis retour à l'étape de réception d'informations de données réseau ; le modèle associé existant comprenant un premier enregistrement indiquant des informations de données de service et au moins une opération de base de données, le premier enregistrement comprenant un type d'opération de service, une opération de service, un niveau d'opération, un objet de service et un hachage de modèle, le hachage de modèle indiquant les résultats de hachage obtenus par une fonction de hachage selon le type d'opération de service, l'opération de service, le niveau d'opération, l'objet de service, le procédé de hachage de modèle servant à comparer un nouveau modèle à un modèle associé existant dans le but d'établir si ce sont les mêmes, si le hachage de modèle est le même mais les commandes d'opération de base de données suivantes sont différentes, le nouveau modèle étant un modèle-enfant du modèle associé existant ;
le module d'intégration de données étant configuré en outre pour recevoir des informations de données réseau, lire le modèle correspondant et les informations de base de données, déterminer si des données correspondantes existent, former des enregistrements d'audit si des données correspondantes existent ; lire un modèle-enfant, déterminer si un modèle-enfant existe ; si un modèle-enfant existe, retourner à l'étape de lecture d'informations de base de données ; si un modèle-enfant n'existe pas, passer à l'opération suivante.

5. Analyseur (30) selon la revendication 4, comprenant en outre :
le module d'exécution de réponse (36), configuré pour recevoir la politique de filtrage générée, et transmettre la politique à la sonde frontale (10) et à la sonde dorsale (20) par le biais respectivement du module de communication frontal et du module de communication dorsal.

6. Système de surveillance de la sécurité d'une base de données, le système de surveillance de la sécurité d'une base de données étant **caractérisé en ce qu'**il comprend un analyseur (30) selon l'une quelconque des revendications 4 à 5 et une sonde frontale (10), configurée pour obtenir des informations de données réseau d'un système de service (40) et une sonde dorsale (20), configurée pour obtenir des informations de base de données accédées par le système de service (40) dans un système de base de données (50).

7. Système de surveillance de la sécurité d'une base de données selon la revendication 6, dans lequel : la sonde frontale (10) est placée à une extrémité frontale du système de service (40), et la sonde dorsale (20) est placée dans un réseau entre le système de service (40) et le système de base de données (50).

8. Système de surveillance de la sécurité d'une base de données selon la revendication 6, dans lequel : la sonde frontale (10) est configurée pour obtenir des informations de données réseau requises auprès du système de service (40), et la sonde dorsale (20) est configurée pour obtenir des informations de base de données requises auprès du système de base de données (50) respectivement par le biais d'un module d'obtention de données, procéder à une analyse syntaxique d'un protocole de service et d'un protocole d'accès de base de données respectivement par le biais d'un module d'analyse syntaxique de protocole, puis transmettre les informations de protocole issues de l'analyse syntaxique à l'analyseur (30) par le biais successivement d'un module d'analyse syntaxique d'application, d'un module d'empaquetage de condensé et d'un module de retransmission et d'analyse, selon un format stipulé.

9. Système de surveillance de la sécurité d'une base de données selon la revendication 6, dans lequel : la sonde frontale (10) et la sonde dorsale (20) sont configurées pour accepter une politique de filtrage délivrée par l'analyseur (30) par le biais d'un module d'obtention de politique, et, suite à une analyse syntaxique de la politique par un module d'analyse syntaxique de politique, transmettre la politique au système de service (40) et au système de base de données (50) par le biais successivement d'un module d'exécution de politique, d'un module de filtrage de données et d'un module de retransmission de données.
